# EUROPÄISCHE PATENTSCHRIFT

(11) **EP 1 211 902 B1**
(45) Veröffentlichungstag und Bekanntmachung des Hinweises auf die Patenterteilung: **24.11.2004**
(21) Anmeldenummer: 01125497.6
(22) Anmeldetag: 07.11.2001
(51) Int. Cl.: H04Q 7/20, H04L 12/28

(54) **Verfahren zur Funkübertragung von Dienstdaten zwischen einer Funkbake und einem mobilen elektronischen Informationsgerät mit Funkanschluss**
Method of transmission of service information between a radio beacon and a mobile information unit
Procédé de transmission de données de service entre une radiobalise et un terminal d'information mobile

(30) Priorität: 13.11.2000 DE 10056205
(43) Veröffentlichungstag der Anmeldung: 05.06.2002
(73) Patentinhaber: Deutsches Zentrum für Luft- und Raumfahrt e.V., 51147 Köln (DE)
(72) Erfinder: Angermann, Michael, Dipl.-Ing., 82166 Gräfelfing (DE); Steingass, Alexander, Dipl.-Ing., 82205 Gilching (DE); Robertson, Patrick, Dr., 82541 Ammerland (DE)
(74) Vertreter: von Kirschbaum, Albrecht, Dipl.-Ing.

(56) Entgegenhaltungen:
- EP-A- 1 024 628
- CRICHTON C ET AL: "When to trust mobile objects: access control in the Jini Software System" TECHNOLOGY OF OBJECT ORIENTED LANGUAGES & SYSTEMS PROCEEDINGS OF THE INTERNATIONAL CONFERENCE, PARIS, FR, 1. August 1999 (1999-08-01), Seiten 116-125, XP002155686
- SUTEDJA I E ET AL: "APPLICATIONS OF JINI TECHNOLOGY IN WIRELESS MOBILE COMPUTING ENVIRONMENT" PROCEEDINGS OF IEEE TENCON 2000. IEEE REGION 10 CONFERENCE. KUALA LUMPUR, SEPT. 24 - 27, 2000, IEEE REGION 10 ANNUAL CONFERENCE, NEW YORK, NY: IEEE, US, Bd. 2 OF 3, 24. September 2000 (2000-09-24), Seiten 207-212, XP000987977 ISBN: 0-7803-6356-6
- "Jini (TM) Architectural Overview" XP002152110
- SUN MICROSYSTEMS: "Jini (TM) Discovery and Join Specification" XP002154096

## Beschreibung

Die Erfindung betrifft ein Verfahren zur Funkübertragung von Dienstedaten zwischen einer Funkbake und einem mobilen elektronischen, mit Funkanschluss versehenen Informationsgerät, in welchem die empfangenen Daten ausgewertet werden, um Teilnehmern über die Funkbake den Zugang zu Informationen der Dienste zu ermöglichen, wobei die Dienste in einem Betriebssystem mit standardisierter Architektur realisiert sind, das auf einer plattformunabhängigen virtuellen Maschine laufen kann und das es ermöglicht, einen Anbieter von Diensten mit Teilnehmern über ein gemeinsames Netzwerk zu koppeln, wobei auf der Seite der Funkbake von einem Dienstanbieter die Dienste angeboten werden, ein Look-Up-Dienst betrieben wird und von einem Ressourcen-Manager die Ressourcen der Funkbake gehandhabt werden und auf der Seite des mit Funkanschluss versehenen Informationsgeräts ein Look-Up-Dienst betrieben und der Dienst der Funkbake durch eine Anwendung genutzt wird.

Im Rahmen von Diensteanwendungssystemen, z.B. Navigationsdiensten, Routenplanungsdiensten oder Essensdiensten, werden Baken vorgesehen, die lokale Informationen über lokale Dienste an ein mobiles elektronisches Informationsgerät, z.B. einen PDA (Personal Digital Assistant), übermitteln sollen. Handelt es sich um eine drahtlos mit Funk arbeitende Bake, so kann die Informationsübertragung zwischen einer solchen Bake und dem elektronischen Informationsgerät dann realisiert werden, wenn dieses Informationsgerät mit einem passenden Funkanschluss ausgestattet ist. Im Zusammenhang mit der Funkübertragung zwischen einer Funkbake und einem mit Funkanschluss versehenen mobilen Informationsgerät treten jedoch Probleme auf, auf welche nachfolgend eingegangen wird.

Ein mobiles Informationsgerät in Form eines PDA, also z.B. ein spezielles Mobiltelephon oder auch Smartphone, wird in nächster Zukunft mit Kurzstreckenstandardfunk ("Bluetooth") ausgerüstet sein. Aus Kosten- und Stromversorgungsgründen wird hier der Leistungspegel 0 dBm = 1 mW zum Einsatz kommen. Hiermit werden nutzbare Funkreichweiten von etwa 10 m erzielt. Die Funkbaken werden mit Sendern mit einer Sendeleistung von +20 dBm = 100 mW ausgestattet werden. Sie erreichen Funkreichweiten von etwa 100 bis 400 m.

Aufgrund der unterschiedlichen Funkreichweiten in den beiden Funkrichtungen kann die Funkbake das mit Funkanschluß ausgerüstete, mobile Informationsgerät erreichen, bevor das Informationsgerät die Funkbake erreichen kann. In einem größeren Bereich um die Funkbake herum ist demnach zwar eine unidirektionale Funkverbindung (Broadcast) von der Funkbake zu einem Informationsgerät hin möglich, jedoch keine Funkverbindung vom Informationsgerät zur Funkbake hin. Eine bidirektionale Kommunikationsverbindung zwischen Funkbake und mobilem Informationsgerät ist also in diesem relativ großen Bereich nicht möglich.

Ein anderes Problem liegt in der Bewältigung einer Vielzahl von bidirektionalen Funkverbindungen. Soll eine Funkbake eine größere Anzahl von Nutzern eines Dienstes mit ein und derselben Information versorgen, z.B. eine Bake vor einem Bahnhof hat 200 Nutzer mit einer Information hinsichtlich Abfahrtszeiten, Taxis und dergleichen zu versorgen, so ist eine entsprechend große Anzahl, also z.B. 200, von bidirektionalen Funkverbindungen aufzubauen, was derart viel Übertragungsbandbreite verbrauchen würde, daß eine vernünftige Datenübertragung unmöglich wäre.

Wegen der angeführten Probleme kommt für die Verbreitung von Diensten, die vielen Nutzern zugleich zugänglich sein sollen, nur ein sogenanntes Broadcasten in Frage. Hierbei sendet die Funkbake ununterbrochen unidirektional ein Signal unabhängig davon, ob und wieviele Nutzer dieses Signal empfangen und verarbeiten. Um die Flexibilität dieser Dienste möglichst hoch zu halten, soll für die elektronische Abbildung der Dienste ein Betriebssystem mit standardisierter Architektur, insbesondere entsprechend der JINI™-Technologie, vorgesehen werden, die es ermöglicht, einen Anbieter von Diensten mit Teilnehmern über ein gemeinsames Netzwerk zu koppeln. Die Schwierigkeit bei Verwendung einer solchen standardisierten Architektur liegt darin, daß letztere auf RMI (Remote Method Invocation) beruht, wodurch eine Verbindung über TCP/IP (Transmission Control Protocol/Internet Protocol) aufgebaut wird. TCP/IP erfordert wiederum eine bidirektionale Verbindung, die mit einem Broadcast-Dienst, der eben nur in einer Übertragungsrichtung wirksam ist, nicht vereinbar ist.

Bei einem üblichen Szenario einer dienstegebundenen Informationsübertragung der vorher genannten Art existieren eine Funkbake und mehrere mobile, mit Funkanschluß ausgerüstete Informationsgeräte. Um die Zusammenhänge nicht unnötig komplizierter darzustellen, wird nachfolgend stets nur von einem solchen mobilen Informationsgerät gesprochen. Die Funkbake enthält einen bakenseitigen Dienstanbieter, der in diesem System den eigentlichen Dienst darstellt.

Dies kann beispielsweise ein Navigationsdienst, ein Essensdienst oder ein Routenplanungsdienst sein. Die Funkbake beinhaltet darüber hinaus einen bakenseitigen Look-Up-Dienst, der das zentrale Element des Betriebssystems mit standardisierter Architektur, insbesondere entsprechend der JINI™-Technologie, auf der Funkbakenseite realisiert. Schließlich enthält die Funkbake einen bakenseitigen Ressourcen-Manager, welcher die Ressourcen der Funkbake handhabt.

Beispielsweise kann hierdurch sichergestellt werden, dass die Bake nur dann eine Werbung für bestimmte Waren versendet, wenn diese Waren auch im Angebot sind. Das mobile, mit Funkanschluss ausgestattete Informationsgerät enthält einen geräteseitigen Look-Up-Dienst, der ein zentrales Element des Betriebssystems mit standardisierter Architektur, insbesondere entsprechend der JINI™-Technologie, auf der Informationsgeräteseite realisiert. Darüber hinaus beinhaltet das Informationsgerät eine Anwendung, welche die Dienste der Funkbake nutzen will.

EP-A-1 024 628 beschreibt ein Verfahren zum Auseinanderhalten von Diensten, die von einer Diensteversorgungseinrichtung in der Nähe eines Informationsgerätes angeboten werden, von solchen Diensten, die von einer nicht in der Nähe dieses Informationsgerätes befindlichen Diensteversorgungseinrichtung angeboten werden, wobei alle diese Einrichtungen einschließlich dem Informationsgerät Teile eines drahtlosen Lokalnetzes sind. Das Informationsgerät unterhält sowohl eine Aufzeichnung mit Informationen über Dienste und zugeordnete Kennzeichen als auch eine Kennzeichenliste über die Diensteversorgungseinrichtungen. Die zugeordneten Kennzeichen und die Kennzeichenliste werden verglichen, um einen zugeordneten Dienst als in der Nähe des Informationsgerätes befindlich zu ermitteln, wenn er von einer Diensteversorgungseinrichtung gemacht wird, die in der Kennzeichenliste aufgelistet ist. Ein zugeordneter Dienst wird als nicht in der Nähe des Informationsgerätes befindlich ermittelt, wenn er von einer Diensteversorgungseinrichtung gemacht wird, die nicht in der Kennzeichenliste aufgeführt ist. Das Informationsgerät umfasst eine Netzwerkschnittstelle zur drahtlosen Kommunikation mit den Diensteversorgungseinrichtungen, die als Funkbaken realisiert werden können, und einen Diensteauffindungsmodul, der die Aufzeichnung mit den Diensten und zugeordneten Kennzeichen unterhält.

Bei diesem bekannten Verfahren handelt es sich also um ein spezielles Dienste-Discovery-Verfahren, bei dem von Informationsgeräten solche Dienste ausfindig gemacht werden sollen, die jeweils in der Nähe der Geräte von anderen Geräten drahtlos angeboten werden. Dabei senden die Diensteversorgungseinrichtungen von Zeit zu Zeit zur Bekanntmachung des jeweiligen Dienstes Diensteinformationen aus, die von allen Informationsgeräten in der Nähe davon empfangen werden können, damit sie auf die angebotenen Dienste aufmerksam gemacht werden. Dieses System beruht auf Gegenseitigkeit, da es sich prinzipiell um bidirektionale drahtlose Verbindungen untereinander handelt, vor allem was die tatsächliche Abwicklung der Dienste selbst und der damit verbundenen Datenmengenübertragung angeht, wodurch bei der eigentlichen Dienstabwicklung die zur Verfügung stehende Übertragungsbandbreite sehr rasch ausgenutzt ist.

Der Erfindung liegt die Aufgabe zu Grunde, ein Verfahren für ein System, das mit einem diensteanbindenden Betriebssystem mit standardisierter Architektur, insbesondere entsprechend der JINI™-Technologie, arbeitet, zu schaffen, bei dem Dienste des Dienstanbieters über eine unidirektionale Broadcast-Verbindung von der Funkbake an den informationsgeräteseitigen Look-Up-Dienst übertragen werden, damit sie von der Anwendung auf der Seite des Informationsgeräts genutzt werden können, so dass keine bidirektionale Funkverbindung mehr erforderlich ist.

Gemäß der Erfindung, die sich auf ein Verfahren der eingangs genannten Art bezieht, wird diese Aufgabe dadurch gelöst, dass Daten der Dienste ausschließlich unidirektional über eine Broadcast-Verbindung von der Funkbake zum mit Funkanschluss versehenen Informationsgerät hin übertragen werden und zwar in folgender Weise:
a) eine Broadcast-Steuerung auf der Seite der Funkbake fragt in regelmäßigen Zeitabständen beim Look-Up-Dienst der Funkbake an, ob ein neuer Dienst hinzugekommen ist, und falls dies zutrifft, wird die Broadcast-Steuerung auf der Seite der Funkbake die betreffende Dienst-Klasse vom Dienstanbieter aufrufen, serialisieren und die Klassen-Datei des betreffenden Dienstes in einen Bitstrom umwandeln;
b) eine physikalische Schicht auf der Seite der Funkbake erhält von der Broadcast-Steuerung auf der Seite der Funkbake den Bitstrom, der das Objekt des betreffenden Dienstes und die Klasse enthält, und versendet diesen Bitstrom periodisch über das Broadcast-Medium;
c) eine Broadcast-Steuerung auf der Seite des Informationsgeräts empfängt über eine ebenfalls im Informationsgerät vorgesehene physikalische Schicht den von der physikalischen Schicht der Funkbake über das Broadcast-Medium ausgesendeten Bitstrom und übermittelt diese Informationen an einen Broadcast-Dienstversorger;
d) der Broadcast-Dienstversorger instanziert mittels der Klassen-Datei ein neues Objekt dieser Klasse und fungiert somit als Dienstanbieter für den auf der Seite des Informationsgeräts vorgesehenen Look-Up-Dienst; und
e) eine auf der Seite des Informationsgeräts vorgesehene Überlassungsprioritätssteuerung kontrolliert die gewünschten Überlassungszeiten des gesendeten Dienstes und limitiert diese auf zweckmäßige Werte.

Das Verfahren nach der Erfindung macht es in vorteilhafter Weise möglich, über eine unidirektionale Broadcast-Funkverbindung Informationen von Diensten zu übertragen, die in einem Betriebssystem mit standardisierter Architektur, insbesondere entsprechend der JINI™-Technologie, realisiert sind, die es ermöglicht, einen Anbieter von Diensten mit Teilnehmern über ein gemeinsames Netzwerk zu koppeln.

In dem Artikel von Ch. Crichton et al: "When to trust mobile objects: access control in the JINI™ Software System", Technology of Object Oriented Languages & Systems Proceedings of the International Conference, Paris, 01.08.1999, S. 116-125, XP002155686 wird neben dem JINI™-System, das auf der bekannten JAVA™-Technik beruht und ein Satz von Protokollen und Programmierungsmodellen für Peer-to-Peer-Dienstbetrieb ist, eine Zugangskontrolle für JINI™ beschrieben. Es wird aufgezeigt, dass sich die durch JAVA™ verschafften und zur Zeit bestehenden Mechanismen für die Zugangskontrolle und für einen sicheren Betrieb in einer JINI™-Umgebung noch als unzulänglich erweisen.

In vorteilhafter Weise werden über die Funkbake in einem unidirektionalen Broadcast-Kanal lokale Informationen über lokale Dienste an mit Funkanschluss ausgestattete, mobile Informationsgeräte ausgesendet. Diese Informationen können insbesondere der Verbreitung von Diensten dienen.

Eine zweckmäßige Weiterbildung des Verfahrens nach der Erfindung besteht darin, daß zusätzlich Einzelinformationen zwischen der Funkbake und einem mit Funkanschluß ausgestatteten, mobilen Informationsgerät über einen zusätzlich vorsehbaren bidirektionalen Funkkanal ausgetauscht werden, wobei es sich hierbei um ein Kurzstreckenfunksystem ("Bluetooth"-Technik) handelt, das aus Reichweitegründen nur dann betrieben werden kann, wenn sich das mobile Informationsgerät in geringem Abstand, d.h. etwa bis zu 10 m, zur Funkbake befindet.

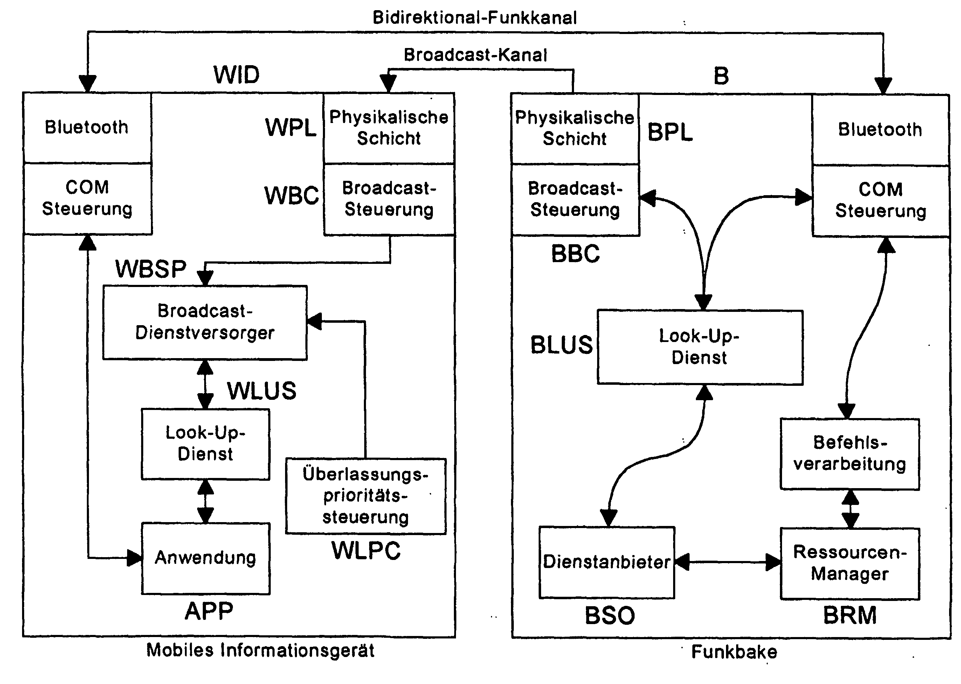

In einer beigefügten Figur ist in einem Strukturplan eines diensteanbietenden Systems mit einem Betriebssystem mit standardisierter Architektur, insbesondere entsprechend der JI-NI™-Technologie, das Zusammenwirken zwischen einer Funkbake B und einem mit einem Funkanschluß versehenen, mobilen Informationsgerät WID dargestellt. Hierbei ist außer der gemäß dem Verfahren nach der Erfindung arbeitenden unidirektionalen Broadcast-Übertragungsmöglichkeit in einem Broadcast-Kanal noch die allerdings nur für geringe Reichweiten einsetzbare Möglichkeit einer bidirektionalen Funkübertragung über einen Bidirektional-Funkkanal mittels des "Bluetooth"-Kurzstreckenfunksystems vorgesehen. Diese zusätzliche Möglichkeit der bidirektionalen Kurzstrecken-Funkübertragung, für welche zwar in der beigefügten Figur die Funktionsblöcke dargestellt sind, wird jedoch nachfolgend nicht im einzelnen beschrieben.

Ein Dienstanbieter BSO auf der Seite der Funkbake B stellt in diesem System den eigentlichen Dienst dar, also z.B. einen Navigationsdienst, Essensdienst oder Routenplanungsdienst. Ein Look-Up-Dienst BLUS realisiert auf der Seite der Funkbake B das zentrale Element des Betriebssystems mit standardisierter Architektur, insbesondere entsprechend der JINI™-Technologie, die es ermöglicht, einen Anbieter von Diensten mit Teilnehmern über ein gemeinsames Netzwerk zu koppeln. Ein Ressourcen-Manager BRM handhabt die Ressourcen der Funkbake B. Beispielsweise läßt sich hierdurch gewährleisten, daß die Funkbake nur dann Werbung für bestimmte Waren versendet, wenn diese Waren auch im Angebot sind. Auf der Seite des Informationsgeräts WID realisiert ein Look-Up-Dienst WLUS das zentrale Element des Betriebssystems mit standardisierter Architektur, insbesondere entsprechend der JINI™-Technologie. Eine im Informationsgerät WID vorgesehene Anwendung APP will den Dienst der Funkbake B nutzen.

Gemäß dem Verfahren nach der Erfindung wird der Dienst des Dienstanbieters BSO über eine unidirektionale Broadcast-Verbindung von der Funkbake an den Look-Up-Dienst WLUS auf der Seite des Informationsgeräts WID übertragen, damit er dort von der Anwendung APP genutzt werden kann.

Für diese Broadcast-Übertragung sind gemäß dem Verfahren nach der Erfindung noch die nachfolgend erläuterten Instanzen vorgesehen, die mit den bereits erläuterten zusammenarbeiten.

Eine Broadcast-Steuerung BBC auf der Seite der Funkbake B fragt in regelmäßigen Abständen beim Look-Up-Dienst BLUS der Funkbake B an, ob ein neuer Dienst hinzugekommen ist. Ist dies der Fall, so wird die Broadcast-Steuerung BBC die Dienst-Klasse vom Dienstanbieter BSO invokieren, d.h. abrufen, und serialisieren. Ebenso wird sie die Klassen-Datei des Dienstes in einen Bitstrom umwandeln. In diesem Szenario verhält sich die Broadcast-Steuerung BBC wie ein Dienstnutzer und entspricht damit der Spezifikation der standardisierten Betriebssystem-Architektur, also z.B. insbesondere der JI-NI™-Spezifikation.

Eine physikalische Schicht BPL auf der Seite der Funkbake B bekommt von der bakenseitigen Broadcast-Steuerung BBC den Bitstrom, der Dienst-Objekt und Dienst-Klasse enthält, und versendet diesen Bitstrom periodisch über das Broadcast-Medium.

Eine auf der Seite des mobilen, mit Funkanschluß versehenen Informationsgeräts WID vorgesehene Broadcast-Steuerung WBC empfängt über eine physikalische Schicht WPL den von der physikalischen Schicht BPL der Funkbake ausgesendeten Bitstrom und übermittelt diese Informationen an einen im Informationsgerät WID vorgesehenen Broadcast-Dienstversorger WBSP. Der Broadcast-Dienstversorger WBSP instanziert mittels der Klassen-Datei ein neues Objekt dieser Klasse und fungiert somit als Dienstanbieter für den Look-Up-Dienst WLUS auf der Seite des Informationsgeräts WID.

Eine im Informationsgerät WID vorgesehene Überlassungsprioritätssteuerung WLPC kontrolliert die gewünschten Überlassungszeiten des gesendeten Dienstes und limitiert diese auf vernünftige Werte, beispielsweise für einen Essensdienst auf 5 Minuten.

Schließlich stellt die im Informationsgerät WID vorgesehene physikalische Schicht WPL das physikalische Medium für die Übertragung bereit, im Broadcast-Fall entsprechend dem Verfahren nach der Erfindung also die Empfangsmittel.

Am Beispiel einer Pizza-Werbung wird nachfolgend der Ablauf des Verfahrens nach der Erfindung in einzelnen Schritten erläutert.
1. Ein Pizza-Anbieter möchte für eine Pizza werben.
2. Der Pizza-Anbieter gibt dieses Werbeangebot in den Ressourcen-Manager BRM auf der Seite der Funkbake B ein.
3. Der Ressourcen-Manager BRM veranlaßt den Dienstanbieter BSO auf der Seite der Funkbake B dazu, ein Objekt der Klasse "Pizzawerbung", einen Abkömmling der Klasse "Werbung" zu instanzieren.
4. Der Dienstanbieter BSO auf der Seite der Funkbake B trägt über das Betriebssystem, also z.B. über JINI™, den Dienst in den Look-Up-Dienst BLUS auf der Seite der Funkbake B ein und bietet so den Dienst an.
5. Die Broadcast-Steuerung BBC auf der Seite der Funkbake bekommt einen Interrupt dahingehend, daß sich der Look-Up-Dienst BLUS auf der Seite der Funkbake B geändert hat, und ruft (invokiert) über das Betriebssystem, also z.B. über JINI™, den Dienstanbieter BOS auf der Seite der Funkbake B auf und lädt das Objekt mitsamt der Klassen-Datei und der Überlassungszeit.
6. Die Broadcast-Steuerung BBC auf der Seite der Funkbake B serialisiert das Objekt mit der Klassen-Datei und Oberlassungszeit und übergibt diesen Bitstrom an die physikalische Schicht BPL auf der Seite der Funkbake B.
7. Die physikalische Schicht BPL auf der Seite der Funkbake B sendet den Bitstrom über ein Broadcast-Medium aus.
8. Die physikalische Schicht WPL auf der Seite des mobilen, mit Funkanschluß ausgestatteten Informationsgeräts WID empfängt den Bitstrom und übergibt ihn an die Broadcast-Steuerung WBC auf der Seite des Informationsgeräts WID.
9. Die Broadcast-Steuerung WBC auf der Seite des Informationsgeräts WID entpackt den Bitstrom und stellt ihn dem Broadcast-Dienstversorger WBSP im Informationsgerät WID zur Verfügung.
10. Der Broadcast-Dienstversorger WBSP instanziert das Objekt und trägt dessen Existenz in den Look-Up-Dienst WLUS auf der Seite des Informationsgeräts WID ein.
11. Der Broadcast-Dienstversorger WBSP klärt mit der im Informationsgerät WID vorgesehenen Überlassungsprioritätssteuerung WLPC, ob die gewünschte Überlassung (Lease) über dem erlaubten Wert liegt, und setzt die Überlassung auf den Minimalwert, also entweder auf den gewünschten Wert oder den erlaubten Wert.
12. Die Anwendung APP auf der Seite des Informationsgeräts WID bekommt einen Interrupt dahingehend, daß sich der Look-Up-Dienst WLUS im Informationsgerät WID geändert hat, und schaut nach, ob der neue Pizza-Dienst verwendet werden kann. Die Anwendung APP kann nun direkt den Dienst beim Broadcast-Dienstversorger WBSP abrufen (invokieren).

### Bezugszeichenliste

- APP: Anwendung
- B: Funkbake
- BBC: Broadcast-Steuerung bei der Funkbake
- BLUS: Look-Up-Dienst auf der Seite der Funkbake
- BPL: Physikalische Schicht bei der Funkbake
- BRM: Ressourcen-Manager
- BSO: Dienstanbieter
- WBC: Broadcast-Steuerung beim Informationsgerät
- WBSP: Broadcast-Dienstversorger
- WID: Informationsgerät
- WLUS: Look-Up-Dienst auf der Seite des Informationsgeräts
- WLPC: Überlassungsprioritätssteuerung
- WPL: Physikalische Schicht beim Informationsgerät

## Patentansprüche

1. Verfahren zur Funkübertragung von Dienstedaten zwischen einer Funkbake und einem mobilen elektronischen, mit Funkanschluss versehenen Informationsgerät, in welchem die empfangenen Daten ausgewertet werden, um Teilnehmern über die Funkbake den Zugang zu Informationen der Dienste zu ermöglichen, wobei die Dienste in einem Betriebssystem mit standardisierter Architektur realisiert sind, das auf einer plattformunabhängigen virtuellen Maschine laufen kann und das es ermöglicht, einen Anbieter von Diensten mit Teilnehmern über ein gemeinsames Netzwerk zu koppeln, wobei auf der Seite der Funkbake von einem Dienstanbieter die Dienste angeboten werden, ein Look-Up-Dienst betrieben wird und von einem Ressourcen-Manager die Ressourcen der Funkbake gehandhabt werden und auf der Seite des mit Funkanschluss versehenen Informationsgeräts ein Look-Up-Dienst betrieben und der Dienst der Funkbake durch eine Anwendung genutzt wird, **dadurch gekennzeichnet, dass** Daten der Dienste ausschließlich unidirektional über eine Broadcast-Verbindung von der Funkbake (B) zum mit Funkanschluss versehenen Informationsgerät (WID) hin übertragen werden und zwar in folgender Weise:
a) eine Broadcast-Steuerung (BBC) auf der Seite der Funkbake (B) fragt in regelmäßigen Zeitabständen beim Look-Up-Dienst (BLUS) der Funkbake an, ob ein neuer Dienst hinzugekommen ist, und falls dies zutrifft, wird die Broadcast-Steuerung auf der Seite der Funkbake die betreffende Dienst-Klasse vom Dienstanbieter (BSO) aufrufen, serialisieren und die Klassen-Datei des betreffenden Dienstes in einen Bitstrom umwandeln;
b) eine physikalische Schicht (BPL) auf der Seite der Funkbake (B) erhält von der Broadcast-Steuerung (BBC) auf der Seite der Funkbake den Bitstrom, der das Objekt des betreffenden Dienstes und die Klasse enthält, und versendet diesen Bitstrom periodisch über das Broadcast-Medium;
c) eine Broadcast-Steuerung (WBC) auf der Seite des Informationsgeräts (WID) empfängt über eine ebenfalls im Informationsgerät (WID) vorgesehene physikalische Schicht (WPL) den von der physikalischen Schicht (BPL) der Funkbake (B) über das Broadcast-Medium ausgesendeten Bitstrom und übermittelt diese Informationen an einen Broadcast-Dienstversorger (WBSP);
d) der Broadcast-Dienstversorger (WBSP) instanziert mittels der Klassen-Datei ein neues Objekt dieser Klasse und fungiert somit als Dienstanbieter für den auf der Seite des Informationsgeräts (WID) vorgesehenen Look-Up-Dienst (WLUS); und
e) eine auf der Seite des Informationsgeräts (WID) vorgesehene Überlassungsprioritätssteuerung (WLPC) kontrolliert die gewünschten Überlassungszeiten des gesendeten Dienstes und limitiert diese auf zweckmäßige Werte.

2. Verfahren nach Anspruch 1, **dadurch gekennzeichnet, dass** über die Funkbake in einem unidirektionalen Broadcast-Kanal lokale Informationen über lokale Dienste an mit Funkanschluss ausgestattete, mobile Informationsgeräte ausgesendet werden, insbesondere Informationen zur Verbreitung von Diensten.

3. Verfahren nach Anspruch 1 oder 2, **dadurch gekennzeichnet, dass** zusätzlich Einzelinformationen zwischen der Funkbake und einem mit Funkanschluss ausgestatteten, mobilen Informationsgerät über einen zusätzlich vorsehbaren bidirektionalen Funkkanal ausgetauscht werden, wobei es sich hierbei um ein Kurzstreckenfunksystem handelt, das aus Reichweitengründen nur dann betrieben werden kann, wenn sich das mobile Informationsgerät im Abstand, bis zu 10 m, zur Funkbake befindet.

## Claims

1. A method of wireless communicating service data between a radio beacon and a mobile, electronic wireless information device in which the received data is analyzed for providing user access to service information via the radio beacon, the services being realized in an operating system having a standardized architecture, the method capable of being run on a platform-independent virtual engine and coupling a server to users via a common network whereby, at the radio beacon end, the services are offered by a server, a look-up service is operated and the resources of the radio beacon are handled by a resource manager and, at the wireless information device end a look-up service is operated and the service of the radio beacon is used by an application, **characterized in that** the service data is communicated exclusively one-way via a broadcast link from the radio beacon (B) to the wireless information device (WID) as follows:
a) a beacon (B) broadcast controller (BBC) interrogates in regular time intervals the look-up service (BLUS) of the radio beacon whether a new service has been added, and if so, the beacon broadcast controller invokes and serializes the service class concerned from the server (BSO) and converts the class data file of the service concerned into a stream of bits;
b) a beacon (B) physical layer (BPL) receives from the beacon broadcast controller (BBC) the stream of bits containing the object of the service concerned and the class and sends this bit stream periodically via the broadcast medium;
c) a WID broadcast controller (WBC) receives via a likewise WID physical layer (WPL) the stream of bits sent from the beacon B physical layer (BPL) by the broadcast medium and communicates this information to a broadcast service provider (WBSP);
d) the broadcast service provider (WBSP) instances by means of the class data file a new object of this class and thus functions as the server for the WID look-up service (WLUS); and
e) a WID leasing priority controller (WLPC) checks the required leasing periods of the sent service and limits them to expedient values.

2. The method as set forth in claim 1, **characterized in that** local information as to local services is sent to mobile wireless information devices via the radio beacon in a one-way broadcast channel, the information serving particularly to disseminate the services.

3. The method as set forth in claim 1 or 2, **characterized in that** additional items of information are exchanged between the radio beacon and a wireless mobile information device via an additional two-way wireless channel embedded in a short-range wireless system, which for reasons of its restricted range can only be operated when the mobile information device is within a distance of 10 m of the radio beacon.

## Revendications

1. Procédé de transmission radio de données de service entre une radiobalise et un terminal d'information électronique mobile muni d'une liaison radio, dans lequel les données reçues sont analysées, afin de permettre à des abonnés d'accéder à des informations sur le service par l'intermédiaire de la radiobalise, moyennant quoi les services sont mis en place dans un système d'exploitation, avec une architecture standardisée, qui peut fonctionner sur une machine virtuelle indépendante de la plateforme et qui permet de coupler un prestataire de services à des abonnés par l'intermédiaire d'un réseau commun, moyennant quoi du côté de la radiobalise les services sont proposés par un prestataire de services, un service de conversion est exploité et les ressources de la radiobalise sont gérées par un gestionnaire de ressources et, du côté du terminal d'informations muni d'une liaison radio, un service de conversion est exploité et le service de la radiobalise est utilisé par une application, **caractérisé en ce que** les données des services sont transmises exclusivement de manière unidirectionnelle par l'intermédiaire d'une liaison en diffusion à partir de la radiobalise (B) vers le terminal d'informations muni de la liaison radio (WID), de la manière suivante :
a) une commande de diffusion (BBC) du côté de la radiobalise (B) demande, à des intervalles réguliers, au service de conversion (BLUS) de la radiobalise si un nouveau service a été ajouté, et si cela est le cas, la commande de diffusion appelle la catégorie de service correspondante du prestataire de services (BSO), la sérialise et convertit les fichiers des catégories du service correspondant en un flux binaire ;
b) une couche physique (BPL) du côté de la radiobalise (B) reçoit, de la part de la commande de diffusion (BBC) du côté de la radiobalise, le flux binaire qui contient l'objet du service correspondant et envoie ce flux binaire de manière périodique par l'intermédiaire du moyen de diffusion ;
c) une commande de diffusion (WBC) du côté du terminal d'information (WID) reçoit, par l'intermédiaire d'une couche physique (WPL) également disposée dans le terminal d'information (WID), le flux binaire envoyé par la couche physique (BPL) de la radiobalise (B) par l'intermédiaire du moyen de diffusion et transmet ces informations à un fournisseur de services de diffusion (WBSP) ;
d) le fournisseur de services de diffusion (WBSP) instancie, à l'aide du fichier de classes, un nouvel objet de cette classe et fonctionne ainsi comme un prestataire de services pour le service de conversion (WLUS) prévu du côté du terminal d'information (WID) ; et
e) une commande de priorité de transfert (WLPC), prévue du côté du terminal d'information (WID), contrôle les temps de transfert souhaités du service envoyé et les limite aux valeurs appropriées.

2. Procédé selon la revendication 1, **caractérisé en ce que** des informations locales, plus particulièrement des informations pour l'extension de services, sont envoyées par des services locaux à des terminaux d'informations mobiles munis d'une liaison radio, par l'intermédiaire de la radiobalise dans un canal de diffusion unidirectionnel.

3. Procédé selon la revendication 1 ou 2, **caractérisé en ce que** des informations individuelles sont, en outre, échangées entre la radiobalise et un terminal d'information mobile muni d'une liaison radio par l'intermédiaire d'un canal radio bidirectionnel supplémentaire, moyennant quoi il s'agit d'un système radio à faible portée qui, pour des raisons de portée, ne peut être utilisé que lorsque le terminal d'information mobile se trouve à une distance non supérieure à 10 m de la radiobalise.
